# EUROPÄISCHE PATENTANMELDUNG

(11) **EP 1 750 416 A1**
(43) Veröffentlichungstag der Anmeldung: **07.02.2007**
(21) Anmeldenummer: 05016706.3
(22) Anmeldetag: 01.08.2005
(51) Int. Cl.: H04L 29/12

(54) **Benachrichtigungsdienst für nicht in ENUM registrierte Teilnehmer**

(71) Anmelder: SIEMENS AKTIENGESELLSCHAFT, 80333 München (DE)
(72) Erfinder: Flemisch, Felix, 81547 München (DE); Heiles, Jürgen, 81476 München (DE); Ottensmeyer, Jörg, 85635 Höhenkirchen (DE); Schink, Helmut, Dr., 81927 München (DE)

(57) **Zusammenfassung**

Bei der Einführungsphase von ENUM ergibt sich ein Problem, wenn für den angerufenen Teilnehmer kein ENUM-Eintrag vorliegt. Der anrufende Teilnehmer kann in dieser Situation zwar eine ENUM-Anfrage starten, erhält aber nur eine Fehlermeldung, da zu diesem FQDN kein ENUM-Eintrag existiert.

Die Aufgabe der Erfindung besteht darin, die genannte Einführungsphase zu verkürzen.

Erfindungsgemäß wird ein gemäß der ENUM-Anfrage angerufener Teilnehmer daher bei Fehlen eines DNS-Eintrags über die Möglichkeiten von ENUM benachrichtigt.

## Beschreibung

### 1. Problem, das der Erfindung zugrunde liegt

In konvergenten Netzen, d.h. in Telekommunikationsnetzen, in denen die klassischen Telekommunikationsdienste auf einer Infrastruktur angeboten werden, die auf Protokollen des Internet basiert, stellt die Adressierung des Teilnehmers ein Problem dar, da unterschiedliche Nummernräume (im Internet die IP Adressen und Domain Namen, in der Telephonie die sog. E.164 Nummern) verwendet werden. Dieses Problem soll gemäß Beschluss der ITU und der IETF, also der zuständigen Standardisierungsgremien, durch das Protokoll bzw. den Dienst ENUM gelöst werden. Dabei wird die Telefonnummer eines Endgeräts nach E.164 in einen Domain Namen, einen sogenannten Fully Qualified Domain Name (FQDN) gewandelt, und dieser Domain Name dann zu einem DNS (Domain Name Server) geschickt, um ENUM-Einträge über die dazugehörigen Adressierungsmöglichkeiten (z.B. via E-mail, SIP Telefon etc.) zu erhalten.

In diesem Zusammenhang ergibt sich ein Problem, wenn für den angerufenen Teilnehmer kein ENUM-Eintrag vorliegt. Dieser Fall wird in der Einführungsphase sehr häufig sein, da die Regulierungsbehören entschieden haben, dass der Teilnehmer aktiv diesen Eintrag vornehmen muss ("user opt in"). Es ist damit zu rechnen, dass es viele Jahre dauern wird bis ein Großteil der Teilnehmer sich für einen ENUM Dienst entschieden hat. In dieser Phase kann der anrufende Teilnehmer zwar eine ENUM Abfrage starten, erhält aber nur eine Fehlermeldung, da zu diesem FQDN ((Fully Qualified Domain Name) kein ENUM-Eintrag existiert.
Das Problem liegt also darin, die Start- und Übergangsphase so kurz wie möglich zu gestalten.

### 2. Bisherige Lösung des genannten Problems

Bisher sind keine Verfahren bekannt. Die "opt in" Prozedur wurde bisher durch die Regulier-Behörden vorgeschrieben.

### 3. Lösung des Problems gemäß der Erfindung

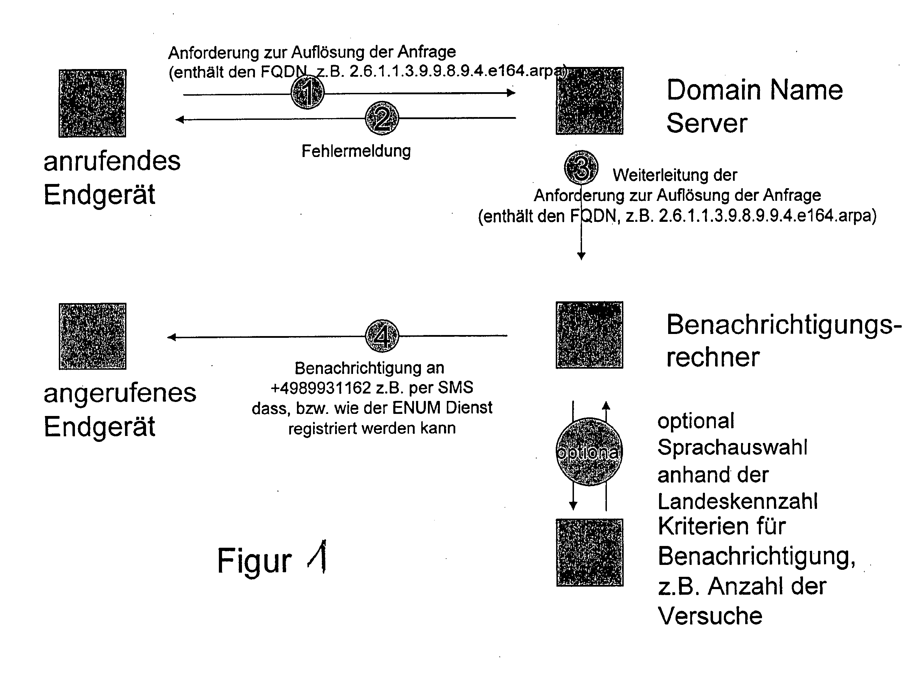

Im Folgenden wird die Erfindung anhand der Zeichnung, die eine Figur umfasst, näher erläutert.

Der FQDN, welcher in einer ENUM-Anfrage von dem Endgerät eines anrufenden Teilnehmer oder einem dem Teilnehmer zugeordneten Gateway an den DNS geschickt wird (1), enthält die vollständige Telefonnummer des angerufenen Teilnehmers. Wenn kein DNS-Eintrag vorliegt, d.h. der angerufene Teilnehmer sich noch nicht eintragen hat lassen, erzeugt DNS eine Fehlermeldung (2). Diese Fehlermeldung wird an das Endgerät des angerufenen Teilnehmers geschickt.

Darüber hinaus wird der angerufene Teilnehmer bzw. das angerufene Endgerät bei Fehlen eines DNS-Eintrags entweder sofort oder erst bei Vorliegen weiterer Umstände bzw. Kriterien (z.B. wenn eine bestimmte Mindest-Anzahl von ENUM-Anfragen zu diesem Anschluss erfolglos durchgeführt wurde) über den ENUM-Dienst benachrichtigt (4). Die Benachrichtigung des Teilnehmers kann durch den DNS selbst oder einen Benachrichtigungs-Rechner (wie in der Figur dargestellt) erfolgen (4), dem der DNS fehlgeschlagene ENUM-Anfragen meldet (3).

Die Benachrichtigung kann z.B. durch das Versenden einer SMS erfolgen. Die Sprache der Nachricht kann z.B. aufgrund der Landeskennzahl gewählt werden. Die Nachricht kann z.B. darüber informieren, daß es einen ENUM-Dienst gibt, wozu er nützt, wie der ENUM-Dienst registriert werden kann. Außerdem kann die Nachricht z.B. einen Hinweis zur einfachen Bedienung wie z.B. einen Hyper-Link, enthalten.

Der Rechner, an den ein DNS fehlgeschlagene ENUM-Anfragen weiterleitet, prüft hierzu gemäß einer Ausführung der Erfindung anhand der Syntax, ob die angegebene Nummer eine E.164 sein kann. Falls ja, wird an diese Nummer z.B. eine SMS geschickt. Werden mehrere Kommunikationswege erkannt, kann auch eine Benachrichtigungsliste erstellt bzw. erweitert werden, um den Teilnehmer über verschiedene Wege zu benachrichtigen. Abhängig von der Erfüllung der Kriterien bei der Syntax-Analyse wird der Teilnehmer also benachrichtigt, wobei ein oder mehrere Kommunikationsformen genutzt werden können.

### 4. Vorteil(e) der Erfindung:

Die Einführungsphase von konvergenten Netzen wird dadurch erheblich beschleunigt. Den Endteilnehmern werden die Vorteile einer Teilnahme an ENUM deutlich.

## Patentansprüche

1. Verfahren zur Verbesserung der Kommunikation in Kommunikationsnetzen, demgemäß
a) Von einem Endgerät eines ENUM-Teilnehmers gegebenenfalls über ein Gateway an einen DNS eine Anfrage nach einem ENUM-Eintrag gestellt wird,
b) von dem DNS anhand des in der Anfrage angegebenen FQDN versucht wird, den genannten ENUM Eintrag zu ermitteln,
c) dem zu dem FQDN gehörigen Teilnehmer automatisch eine Benachrichtigung hinsichtlich des ENUM-Dienstes zugesendet wird, wenn der genannte Versuch fehlschlägt und/oder zu diesem FQDN zusätzliche weitere Umstände vorliegen.

2. Verfahren nach Anspruch 1,
**dadurch gekennzeichnet,**
**dass** die genannte Benachrichtigung über einen Benachrichtigungs-Rechner durchgeführt wird, der von dem DNS über fehlgeschlagene ENUM-Versuche informiert wird.

3. Verfahren nach Anspruch 1 oder 2,
**dadurch gekennzeichnet,**
**dass** es sich bei den genannten zusätzlichen weiteren Umständen ebenfalls um fehlgeschlagene ENUM-Versuche zu demselben FQDN handelt.

4. DNS, der
a) eine Anfrage nach einem ENUM Eintrag empfängt,
b) versucht anhand des in der Anfrage angegebenen FQDN den genannten ENUM-Eintrag zu ermitteln,
**dadurch gekennzeichnet,**
**dass**
c) er, wenn der genannte Versuch fehlschlägt oder zu diesem FQDN zusätzliche weitere Umstände vorliegen, dem zu dem FQDN gehörigen Teilnehmer automatisch eine Benachrichtigung hinsichtlich des ENUM-Dienstes zusendet.

5. Rechner, der
a) von einem DNS eine Benachrichtigung erhält, wenn der DNS ohne Erfolg versucht hat, zu einem FQDN einen ENUM-Eintrag zu ermitteln,
b) aufgrund der genannten Benachrichtigung den zu dem FQDN gehörigen Tln hinsichtlich des ENUM-Dienstes sofort benachrichtigt oder erst dann, wenn zu diesem FQDN zusätzliche weitere Umstände vorliegen.
